# EUROPEAN PATENT SPECIFICATION

(11) **EP 1 723 484 B1**
(45) Date of publication and mention of the grant of the patent: **14.09.2011**
(21) Application number: 04784223.2
(22) Date of filing: 15.09.2004
(51) Int. Cl.: H04L 12/24, H04L 29/06, H04L 29/12

(54) **Method and system for plug and play installation of network entities in a mobile wireless internet**
Verfahren und System zur Plug- und Play-Installation von Netzwerkentitäten in einem mobilen drahtlosen Internet
Procédé et système pour installation prété à tourner d'entités de réseau dans un internet sans fil mobile

(30) Priority: 15.09.2003 US 662893
(43) Date of publication of application: 22.11.2006
(73) Proprietor: Telcorda Technologies, Inc., Piscataway, NJ 08854-4157 (US); Kabushiki Kaisha Toshiba, Tokyo 105-8001 (JP)
(72) Inventor: VAKIL, Faramak, Bedminster, NJ 07921 (US); BYUNGSUK, Kim, Edgewater, NJ 07020 (US); MADHANI, Sunil, Morristown, NJ 07960 (US); VAN, Den Berg Eric, Hoboken, NJ 07030 (US); BABA, Shinichi, Irvine, CA 92618-1697 (US)
(74) Representative: Beetz & Partner
(86) International application number: PCT/US2004/030287
(87) International publication number: WO 2005/029256

(56) References cited:
- WO-A-01/80023
- US-A1- 2002 133 575
- US-B1- 6 345 294
- US-B1- 6 757 723
- BIESZCZAD A ET AL: "TOWARDS PLUG-AND-PLAY NETWORKS WITH MOBILE CODE" ICCC'97. 13TH INTERNATIONAL CONFERENCE ON COMPUTER COMMUNICATION. KEYS TO A MATURE INFORMATION SOCIETY. CANNES, NOV. 18 - 21 1997; [PROCEEDINGS OF INTERNATIONAL CONFERENCE ON COMPUTER COMMUNICATION], ÄS.L.Ü : ÄS.NÜ, vol. CONF. 13, 18 November 1997 (1997-11-18), pages 255-269, XP000753904 ISBN: 978-2-7261-1104-8

## Description

### FIELD OF THE INVENTION

The present invention relates to mobile telecommunications networks and, in particular, to methods and systems for activating new network entities and appliances in a mobile wireless Internet with minimal or no human intervention.

### BACKGROUND

In mobile telecommunications networks the current prevalent practice for expanding the network and service infrastructure or the subscriber base involves significant human interaction with the network and significant human operator assistance. For instance, proper activation of new network entities and appliances (e.g., routers, servers, user hosts and appliances, etc.) requires involvement of expert human operators with significant networking and software troubleshooting knowledge after the installation of the necessary hardware. Such a manual process is time-consuming, tedious, prone to errors, and expensive. The automation of these network and service management tasks is quite desirable because it reduces chances of human error, improves network services, reduces operation, administration, maintenance and provisioning (OAM&P) costs, and enhances network providers' competitiveness and profit.

The global wireless and wireline communication infrastructure plays a critical role in present world. In order to manage this infrastructure, network operators and service providers usually maintain large workforces and invest large sums of money in OAM&P systems to ensure the proper operation of their communication infrastructure in order to satisfy consumer demand. Furthermore, network operators rely on OAM&P systems to deploy appropriate business policies to enhance their competitiveness and profitability in the marketplace.

In the last several years, the home networking industry has developed a standard called Universal Plug and Play (UPnP). UPnP is a plug and play technology developed for the home networking environment UPnP provides an interactive approach that relies heavily on the user's interaction with the network and is primarily tailored to ad-hoc home networks. UPnP assumes that the users have a-priori knowledge of their appliances' (or entities') needs and interact with the network to obtain them. It requires too much user interaction, is inconvenient for typical users, and too prone to their errors to work in the mobile Internet environment.

WO-A-01 / 80023 discloses a system and method for upgrading deployed networked devices which are enabled with an installed agent capable of identifying and communicating with a server running the upgrade program. Tube server can locate the device, query the state of the device and when the appropriate predetermined conditions are met, download the upgrade to the devise.

US-A-2002/0133575 discloses a method for network service diagnostics, including receiving a request from a user of a computer for assistance in an activity performed by the computer. Responsive to the request, an executable program module is downloaded to the computer over a communication network so as to cause the computer to perform diagnostic operation.

### SUMMARY

It is an object of this invention to provide a method and system to add and activate network elements, such as routers, base transceiver stations (BTS) and servers, with minimal or no human intervention.

It is a further object of the present invention to permit subscribers of mobile telecommunications networks, such as cellular phone or other wireless networks to install and activate their wireless appliances with the same ease as landline telephones are currently installed

It is another further object of the present invention to allow mobile wireless Internet operators to add new network entities to their infrastructures and permits users to activate their wireless appliances and services automatically with minimal (if any) human assistance thereby reducing OAM&P costs and promoting user convenience.

The above objects are achieved by the features specified the independent claims of the present application.

The primary requirements of a plug and play process in wireless networks, as in wireline networks, are security, reliability, automation and reasonable signaling overhead. In general, plug and play is not a real-time process, though it is possible that a mobile user could roam across administrative domains before completion of an ongoing plug and play process. Thus, in a mobile wireless Internet, the plug and play process has stringent real-time response requirements in case of user appliances so mobile users can plug and activate their appliances even if such users are not stationary during the process without disrupting the user's ongoing service.

The plug and play process and system of the present invention enables any entity to join the network but also protects the network against malicious users or entities. The process and system scans new incoming entities to ensure they are virus free and do not pose a threat to the networks operation. Additionally, the process and system provide means of mutual authentication between the user and the plug and play server without compromising their security credentials. Furthermore, the process and system guarantees the privacy of the necessary communications particularly on wireless links.

The plug and play process and system must be reliable and accurate to avoid either network disruptions or user dissatisfactions and must be automated maximally to reduce the deployment time and cost as well as minimize the potential for human errors and increase its reliability.

Plug and play signaling overhead is not a critical factor for the network entities that are connected through the core part of the mobile wireless Internet. Wireless bandwidth is scarce, however, so the required signaling for the addition and activation of mobile terminals, also referred to as mobile stations, should be minimized. Any particular mobile station many not be quasi-stationary during the plug (addition or insertion) process. If so, the plug and play process may have a stringent delay requirement because the network knows nothing about this mobile station before completion of the plug and play process and the mobile station is unable to take advantage of the network's mobility features and services and the mobile station's connection with the plug server is lost.

A method and system is provided for enabling the connection of a new entity or appliance to a mobile wireless Internet for provision of services to a user of the entity. A temporary IP address is assigned to the new entity. The new entity searches for and communicates in a secure manner with a plug server that collects information on the user's identity and subscription and authenticates and validates such information. The plug server then uses an inspector agent to identify the software needed by the entity to provide the service. The plug server then collects the necessary software from one or more software inventories in which it is in communication. The software is then forwarded to the entity and installed by the inspector agent. The entity is then assigned a new "permanent" IP address and necessary topology and link layer data is collected by the plug server from the cell parameter server, and are downloaded to the entity by the inspector agent. The entity is connected or "plugged" into the mobile wireless Internet with minimal user interaction. The profile server for the network is updated to reflect the newly "plugged" entity.

In the present invention the plug server is the gateway between the entity or appliance and the software inventory, cell parameter server, AAA and credit bureau server.

The present invention also provides for the automated assignment of a temporary IP address to the entity through the use of an Auto-IP function for use in IPv4 networks.

At the initiation of the plug and play process the entity need only execute plug and play client software, which contains the Auto-IP, Server Discovery and PlugMe modules. All additional software necessary for a specific service is identified by the inspector agent, collected by the plug server, and downloaded from the plug server to the entity and installed by the inspector agent. The plug and play client also contains security policy profiles that grant the inspector agent required security permissions for installing the downloaded software on the entity in a secure manner.

The plug server includes three inventive software modules for performing the plug and play process: a selection handler, a subscription handler, a login handler and the inspector agent.

### BRIEF DESCRIPTION OF THE DRAWINGS

FIG. 1 depicts a first embodiment of the mobile wireless plug and play system in accordance the present invention.
FIGS. 2a and 2b depict the process flow for the plug and play process of the present invention.
FIG. 3 depicts the process flow for the Auto-IP process of the present invention.
FIGS. 4a and 4b depict the process flow of the plug process for a network entity of a current subscriber.
FIG. 5 depicts the software architecture of a plug and play client in accordance with the present invention.
FIG. 6 depicts the software architecture of a plug server in accordance with the present invention.

### DETAILED DESCRIPTION OF THE DRAWINGS

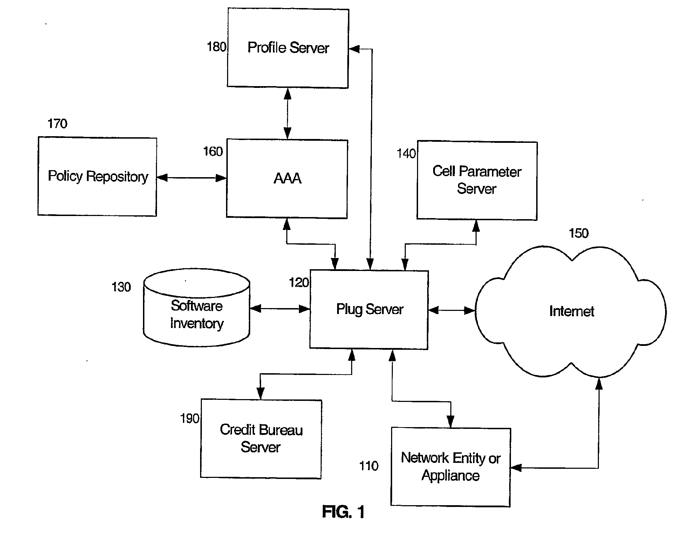

FIG. 1 depicts a mobile wireless plug and play system in accordance with the present invention. A network entity or appliance **110** is a server, router, user host or user appliances that forms or will form part of a mobile wireless Internet. The term entity and appliance as well as element may be used herein to refer to servers, routers, cell phones, wireless PDAs and other devices that operate in a mobile wireless network. Network entities and appliances **110** are preferably equipped with a TCP/IP protocol software suite, a Java Virtual Machine (JVM), a Java-enable HyperText Transfer Protocol (HTTP) browser, and the plug and play client software as specified in this invention.. The present invention uses a web-based client server architecture relying on HTTP for communications between the client and the server.

The foundations of the proposed system architecture are plug server **120,** software inventory **130** and a cell parameter server (i.e., a configuration server) **140.** The plug server **120** is the focal point of contact between any new entity **110** and the network. Upon attachment to the Internet **150** through a mobile wireless connection, a new network entity or appliance **110** attempts to discover a plug server **120.** Each plug server **120** uses the Java database connectivity (JDBC) application programming interface (API) to interact with the authentication, authorization and accounting (AAA) server **160** and/or credit bureau **190** to authenticate the user's identity and/or the user's credit. Upon successful authentication, the plug server **120** dispatches a software-implemented inspector agent, described below, to the new entity or appliance **110** in order to assess the software needs of that entity or appliance. The plug server **120** then interacts with the software inventory **130** and cell parameter server **140** to obtain the necessary configuration and software for the entity or appliance **110.** Finally, the inspector agent downloads this software from plug server **120,** and installs and configures the entity or appliance **110.**

The software inventory **130** is the repository of all the network and service management software that is available to and accessible by the plug server **120.** The software inventory comprises a distributed database on the worldwide web that has spread across the mobile wireless Internet. The exact architecture for realization of this database depends on the plug and play process delay requirements, operators' business constraints, costs, as well as regulatory policies. Using information on these factors it would become obvious for one skilled in the art to design the software inventory architecture.

In general, a network entity (or an appliance) **110** is likely to contain Dynamic Registration and Configuration Protocol (DRCP)/Dynamic Host Communication Protocol (DHCP). The DRCP/DHCP client is not necessary if IPv6 is used due to its stateless auto-configuration feature. However, to ensure a uniform plug and play process across both IPv4 and IPv6 networks, these is an Auto-IP process for IPv4 that utilizes router solicitation and advertisement messages to auto-configure IPv4 entities. The Auto-IP process is discussed in greater detail below.

The cell parameter server (or configuration server) **140** contains the topology information and layer two configurations of the wireless network and its cells such as frequency reuse plans. An off-line network planning and design bench, such as the Telcordia Network Engineer, periodically computes and updates network configuration information in accordance with the provider's network-wide policies and forward it to the cell parameter (i.e., configuration) server.

The policy repository **170** is used by the AAA **160** as the repository for all rules regarding authentication. The policy repository **170** is a database containing the rules that governs the access rights, usage, quality of service, security privileges etc. of subscribers and/or their services. The AAA server **160** is a collective responsible for verifying subscribers' identities (i.e., authentication), their privileges (i.e., authorizations), and their usages and means of charging and paying (i.e., accounting).

A profile server **180** is a server that provides information regarding the profile of the user to the AAA **160** and the plug server **120.** The profile server **180** is a repository of subscriber, service, and terminal objects. Each subscriber has a subscriber object to define the basic service authorizations, one or more terminal objects to define the capabilities of various terminals that the subscriber normally uses and one or more service objects defining the services available to a subscriber.

The credit bureau server **190** is responsible for clearing requests for services with regard to funds available for a specific user with regard to specific requested services. The credit bureau server **190** is a repository of subscribers credit credentials such as their credit cards, their credit limits, billing addresses, etc.

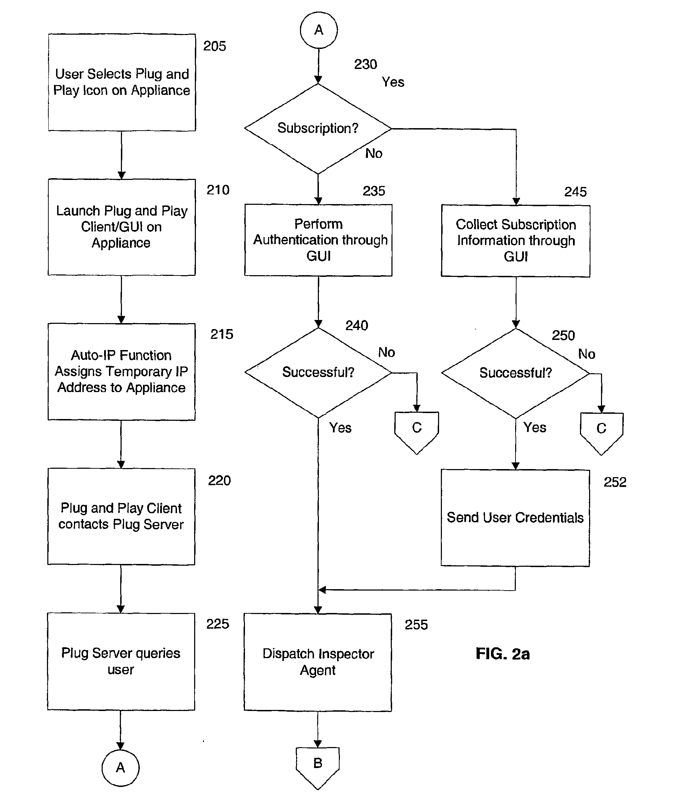

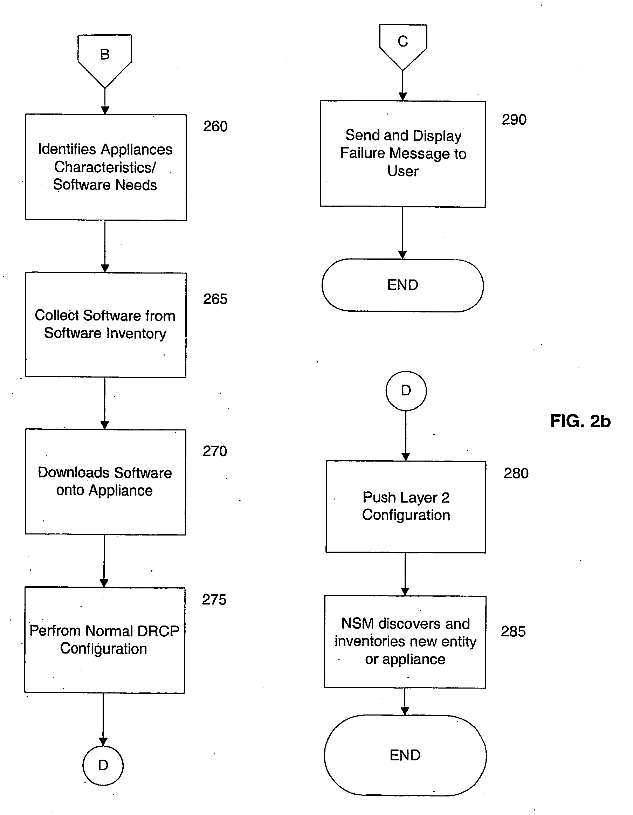

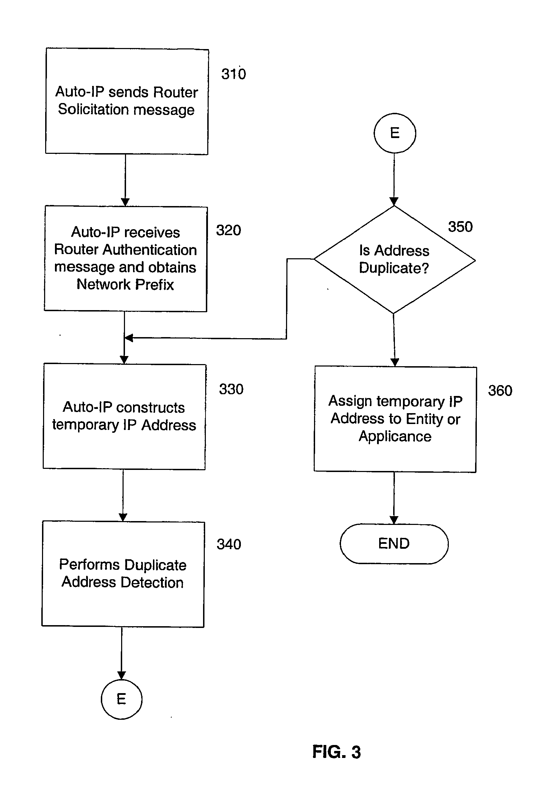

The process flow for the plug and play process is depicted in FIGS.2a and 2b. In the method of the present invention, at step **205** the user of a new entity or appliance, either an operator or user/subscriber, clicks on the plug and play (P&P) icon on the network entity or appliance **110.** At step **210,** the plug and play client begins to execute, a GUI opens and the user selects the appropriate option to initiate the plug process. At step **215,** the Auto-IP function of the plug and play client utilizes router solicitation and advertisement messages to assign a temporary and unique IP address to the appliance. The Auto-IP process is further defined below in connection with FIG. 3. The plug and play client subsequently seeks to find and contact a plug server at step **220.** Upon its discovery and contact with the appliance or entity **110** after mutual authentication, the plug server queries the user of the appliance or entity to determine whether the user intends to subscribe to network service(s) or already has a valid subscription at step **225.** Depending on the user's response either an authentication or subscription process takes place branching at step **230.** If the user is requesting a service subscription, the plug and play client collects information about the user and his credit through the GUI at step **245.** If the subscription is determined to be valid the newly assigned credentials of the user are sent to the entity (or appliance) at step **252.** Alternatively, if the user does not require a subscription and already has a valid one, the plug server **120** authenticates the identity of the user through plug and play client and its GUI at step **235.** If the authentication is successful the process continues on to step **255.** If either authentication or subscription validation are not successful the user will receive an error message at step **290.**

At step **255,** the server dispatches an inspector agent, which in the preferred embodiment is a Java applet, onto the network element (entity or appliance) to identify what software it needs to provide the service. On behalf of the plug server **120,** the inspector agent identifies the necessary software at step **260,** retrieves (either by itself or in cooperation with the plug server) the necessary software from the software inventory **130** at step **265** and downloads the software into the entity or appliance **110** and installs the software in the entity at step **270.** At step **275,** after installation of the necessary software in the entity, the element/appliance utilizes the normal DRCP/DHCP procedure to configure itself with an address that is taken from the provider where the DRCP/DHCP server may re-assign the temporary address as its permanent one. The advantage of receiving an address from the provider's DRCP server is that it reduces the chance for the existence of duplicate addresses and ensures that the entity's address is unique.

The final step in the plug and play process is the downloading of all necessary link layer and topology configuration data into the element at step **280.** Upon completion of step **285** the element or entity becomes an entity or appliance managed by the network and service management system (NSM).

FIG. 3 depicts the Auto-IP process that utilizes router solicitation and advertisement messages to assign a temporary unique IP address to the entity or appliance. At step **310,** the Auto-IP routine sends a Router Solicitation message and listens for a Router Authentication messages to obtain the Network Prefix. At step **320,** the Auto-IP routine constructs a temporary IP address comprising the Network Prefix plus a randomly chosen Host Suffix and then perform a Duplicate Address Detection (DAD) at step **330.** If the Duplicate Address Detection (DAD) fails, i.e., if the chosen address is already in use as determined at step **350,** the Auto-IP process returns to step **330** and another temporary IP address is constructed, otherwise the network element has its temporary and unique IP address for assignment at step **360.**

The plug and play process and system of the present invention provides a mechanism for the unambiguous discovery of the plug server. Additionally, upon reception of the plug request from a plug client, the plug server asks the client to upgrade to secure HTTP (S-HTTP) so that subsequent interactions take place on a secure socket layer. The Java virtual machine (JVM) has a security policy management tool called "policytool" that provides code signing as well as permission assignment mechanisms. The JVM "policytool" can be utilized to ensure mutual plug server-client authentication as ell as grant read, write and execute permission to the inspector agent in the Java runtime environment of a Java enables browser as necessary. The inspector agent reads files on the element's disk to determine what is missing, obtains the necessary software from the software inventory and writes the software to the element's memory (whether disk or RAM) and executes all necessary commands to install the software properly. In principle, the JVM "policytool" enables the plug and play client to define a security policy file so that it interacts with the plug servers which can identify themselves with certificates that are recognized by the plug and play client. The JVM "policytool" grants certain permissions and rights to inspector agents (i.e., Java applets) that are signed with certificates of recognized network operators and/or service providers.

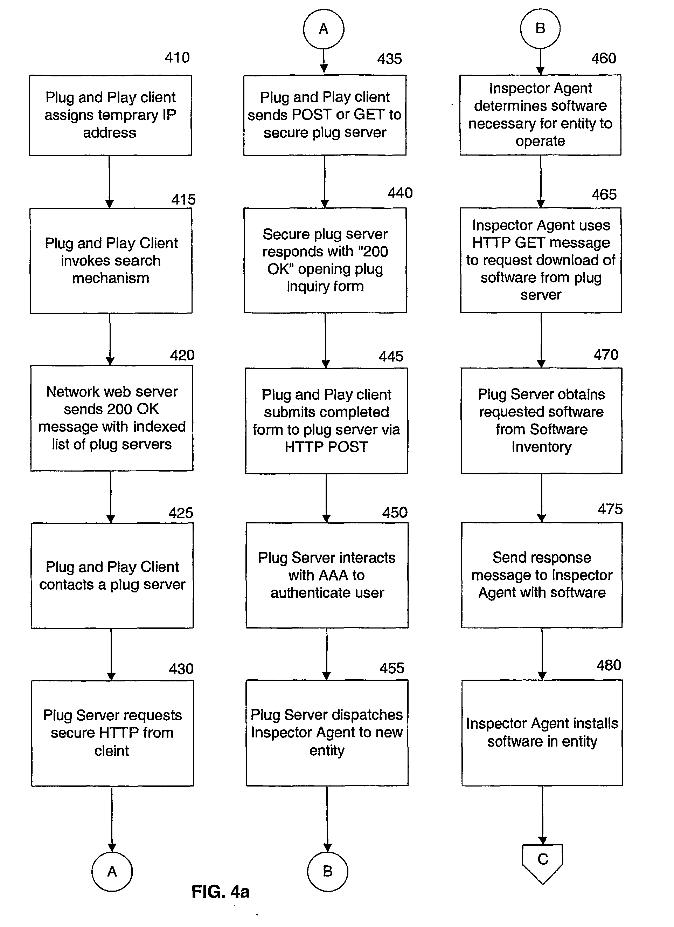

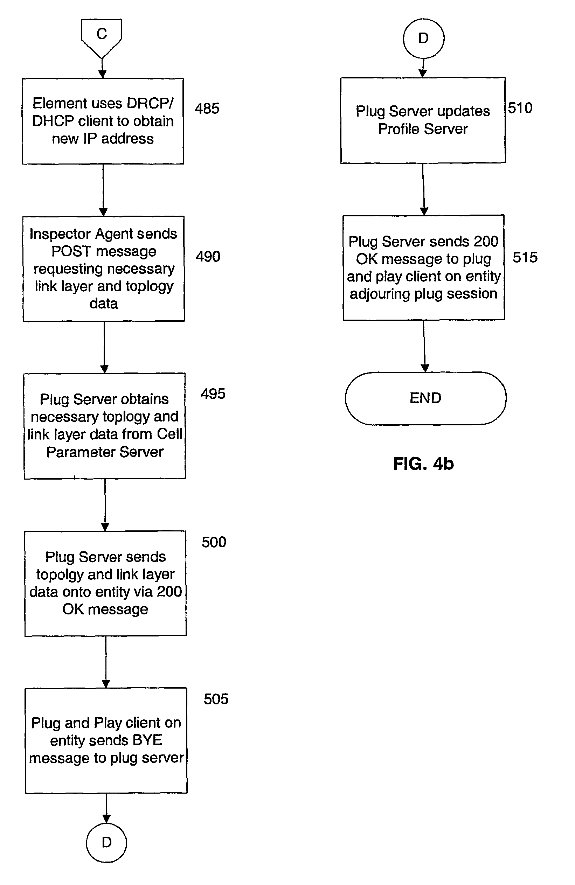

FIG. 4 shows the signaling flow of the plug process for a subscriber who has a current valid subscription. At step **410** of FIG. 4 the plug and play client assigns a temporary IP address using either its own Auto-IP scheme or the DRCP/DHCP of the entity or element. At step **415** the plug and play client invokes its search mechanism, to discover a plug server or set of plug servers on the network. At step **420,** in response to this search request, a network web server sends a 200 OK message containing an indexed list of plug servers. At step **425,** the plug and play client selects one of the plug servers on the list and contacts the selected plug server using the HTTP POST or GET message/method. At step **430,** the plug process must be made secure so the plug server immediately sends an HTTP 101 (switching protocol) message containing the upgrade general header to inform the client that it has requested a secure HTTP page. The client-server communications take place on a secure connection thereafter.

At step **435,** the plug and play client sends its POST or GET request to the secure plug server through a secure connection. At step **440,** the secure plug server responds with a "200 OK" message opening a plug inquiry form asking about the client's subscription status. At step **445,** the plug and play client submits the completed LOGIN form to the server via HTTP POST message. At step **450,** the plug server interacts with the network AAA system to authenticate the user's credentials. Upon successful authentication of the user, the plug server dispatches an inspector agent at step **455** to determine the needs of the new element at step **460.** The inspector agent utilizes HTTP GET messages to download necessary software from the plug server at step **465.** At step **470,** the plug server obtains the necessary software from the software inventory located at various servers across the network and packs if into a response message sent to the inspector agent at step **475.** The plug server uses a 200 OK message to send all necessary network and service management (NSM) software and/or scripts such as SIP, SNMP, DRCP, etc. to the inspector agent. At step **480,** the inspector agent installs the NSM software. The proper preparation of the NSM software package plays a key role in the realization of successful plug and play kit.

At step **485,** the element uses its newly installed DRCP/DHCP client to perform a normal configuration and acquire a "permanent" address from the operator/provider. At step **490** the inspector on the P&P client sends a POST message to the plug server asking for the necessary link layer and the network topology data (e.g., a frequency plan for a TDMA BTS). At step **495,** the plug server obtains the necessary topology and link layer data from the cell parameter server (i.e., network configuration server). At step **500,** the plug server pushes the topology and link layer data onto the element via a 200 OK message. The plug is now complete. At step **505,** the plug and play client sends a BYE message to the plug server. Upon reception of the BYE message, the plug server updates the profile server at step **510** to reflect the final profile of the now plugged element. At step **515,** the plug server sends a 200 OK message to the plug and play client adjourning the plug session.

The present invention has been implemented in Java using HTML scripts to provide a web-based user interface. The plug and play server runs on an Apache-Tomcat-3.2.3 web server that provides an appropriate execution environment for running Java servlets and the client utilizes the Java enables web browser of the new element.

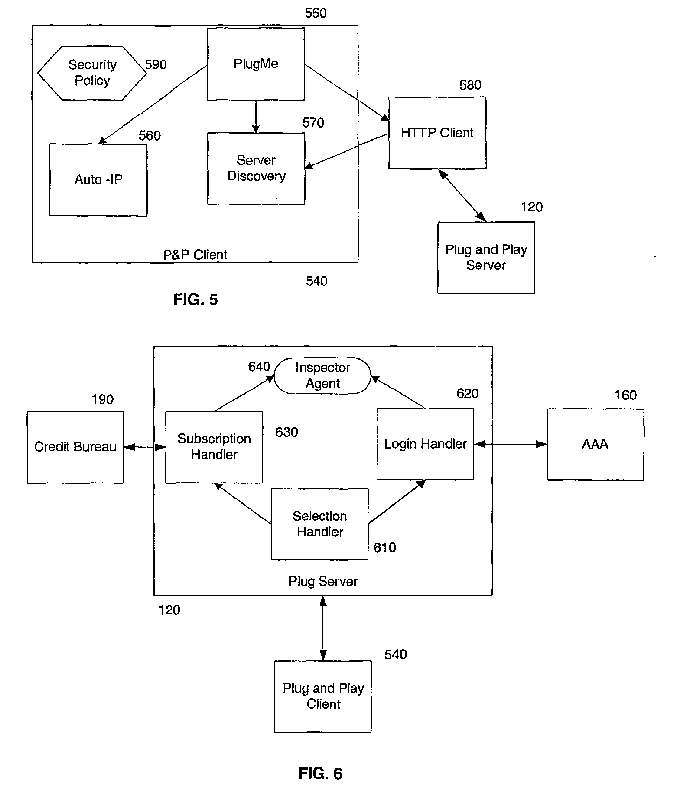

FIG. 5 depicts the software architecture of the plug and play client **540.** PlugMe **550,** Auto-IP **560** and Server Discovery **570** are the three objects comprising the plug and play client **540** that interact with an HTTP client (i.e., the appliance web browser) **580.** Moreover, the plug and play client **540** also contains a security policy file **590** that allows the appliance to grant necessary permission to the inspector agent applets that are dispatched onto it by the plug server **120.** The PlugMe object **550** written in the Java language is the main object and provides a simple graphical user interface (GUI) for the plug and play client. The PlugMe object allows a user to initiate the plug process and integrates the plug and play client security profile with the ".java.policy" file of the JVM on the appliance. The Auto-IP object **560** is written in the C programming language and is integrated in executable format with other objects of the plug and play client using the Java Runtime package in the PlugMe object. The Server Discovery object **570** searches the web to find potential plug servers, selects one according to its indexing scheme, and contacts the selected server.

The software architecture of the plug server **120** is depicted in FIG. 6. The plug server comprises three servlets: Selection Handler (or Service Inquiry) **610;** Login Handler **620;** and Subscription Handler **630.** Plug server **120** also includes an inspector agent **640** that resides on the web server and communicates with the plug and play client **540** through HTTP. Depending on whether the user is already a subscriber or not, the Selection Handler **610** forwards the plug requests to either the Login Handler **620** or the Subscription Services Handler **630.** The Login Handler **620** receives the user ID and password and interacts with the AAA **160** to authenticate the user. Upon successful authentication the Login Handler dispatches the Inspector Agent **640** onto the entity or appliance.

The Subscription Handler **630** receives user's credit card information and verifies it with the credit bureau **190.** If verification is successful, the Subscription Handler **630** assigns a user ID (comprising first initial plus last name) and a password (a six digit or less random number in the present embodiment) to the user and dispatches the Inspector Agent **640** onto the appliance.

The Inspector Agent **640** searches the appliance disk, more specifically "/etc/protocols" and "/etc/services" files (in the present embodiment) to determine the needs of the appliance. As already mentioned, the plug and play client **540** contains a security policy file **590** that instructs the appliance to grant necessary permissions to the Inspector Agent **640.**

The software inventory **130** in the preferred embodiment of the present invention contains all necessary software and configuration data for providing all network services. However, in the present embodiment, it only contains all necessary software and data for supporting mobility with SIP. This software includes the mobility enabled SIP client, DRCP, Robust Audio Tool (RAT) and Video Conferencing tool (VIC) that are packed into a single tar file.

The plug and play process of the present invention is designed to work in a mobile wireless Internet environment with IPv4 or IPv6 transport that conforms to the network reference architecture (NRA) of the Mobile Wireless Internet Forum (MWIF) or one of its 3GPP or 3GPP2 variants. The process and system are primarily tailored to carrier environments with well-defined heterogeneous functional elements, though it is general enough for use in enterprise, home or ad-hoc networks

The above description has been presented only to illustrate and describe the invention. It is not intended to be exhaustive or to limit the invention to any precise form disclosed. Many modifications and variations are possible in light of the above teaching. The applications described were chosen and described in order to best explain the principles of the invention and its practical application to enable others skilled in the art to best utilize the invention on various applications and with various modifications as are suited to the particular use contemplated.

## Claims

1. A method for connecting an entity (110) to a network that provides mobile wireless Internet service to a user of the network comprising:
assigning (215) a temporary IP address to the entity;
creating (220) a communication link between the entity and a plug server through the Internet;
identifying (260) the software necessary for the entity to provide the service by sending an inspector agent from the plug server to the entity capable of discovering the software needs of the entity;
sending (490) a request from the inspector agent to the plug server requesting necessary link layer and topology data;
collecting (495) the necessary link layer and topology data from a cell parameter server;
forwarding (500) the necessary link layer and topology data to the entity;
collecting (265) the necessary software from one or more software inventories in communication with the plug server;
forwarding the necessary software from the plug server to the entity; and,
installing and configuring (270) the necessary software at the entity.

2. The method of claim 1 further comprising the steps of:
collecting (245) information about the identification of the user;
performing (235) authentication of the user's identification prior to the step of identifying the software necessary for the entity to provide the service.

3. The method of claim 1 further comprising the steps of:
securing (430, 435) the communication link between the entity and the plug server using a request for secure HTTP.

4. The method of claim 1 further comprising the steps of:
assigning (485) a new IP address to the entity using DRCP and/or DHCP.

5. The method of claim 1 wherein the step of assigning (215) a temporary IP address to the entity further comprises the steps of:
sending (310) a router solicitation message;
receiving (320) a router authentication message and obtaining a network prefix therefrom;
constructing (330) a temporary IP address for the entity; and,
performing (340) duplicate address detection.

6. A system for connecting an entity (110) to a network that provides a mobile wireless Internet service to a user of the network comprising:
a plug server (120) in communication with the entity to be connected;
a software inventory (130) in communication with the plug server for storing software necessary for the entity to provide the service to the user; and
a cell parameter server (140) in communication with the plug server for storing link layer and topology data necessary for the entity to provide the service to the user;
wherein the plug server (120) is adapted to sending an inspector agent to the entity (110) to identify the software needed by the entity to provide the service to the user and collecting the identified necessary information from the software inventory (130),
**characterised in that**
said plug server (120) is further adapted to collecting the necessary link layer and topology data from the cell parameter server (140) and forwarding the collected software and data to the entity (110).

7. The system of claim 6 further comprising a means for communicating between the plug server and the entity in a secure manner.

8. The system of claim6 wherein the entity further comprises a server discovery software module for discovering a plug server in the Internet (150).

9. The system of claim 6 wherein the entity further comprises an Auto-IP software module for assigning a temporary IP address to the entity.

10. The system of claim 6 further comprising an AAA protocol based authentication server (160) in communication with the plug server (120) in order to authenticate information about the identity of the user of the entity.

11. The system of claim 10 further comprising a profile server (180) in communication with the authentication server (160) and the plug server (120) for storing information regarding the identity of entities in the mobile wireless Internet.

12. The system of claim 6 further comprising a credit bureau server (190) in communication with the plug server (120) in order to validate information about the subscription of the user of the entity.

## Patentansprüche

1. Verfahren zum Verbinden einer Entität (110) mit einem Netz, das einem Benutzer des Netzes einen mobilen drahtlosen Internetdienst zur Verfügung stellt, mit:
Zuweisen (245) einer zeitweiligen IP-Adresse an die Entität;
Erzeugen (220) einer Kommunikationsverbindung zwischen der Entität und einem Plug-Server durch das Internet;
Identifizieren (260) der Software, die notwendig ist, damit die Entität den Dienst bereitstellt, durch Senden eines Inspektoragenten (inspector agent) von dem Plug-Server an die Entität, der imstande ist, die Softwareanforderungen der Entität zu erfassen;
Senden (490) einer Anfrage von dem Inspektoragenten an den Plug-Server, die die notwendige Verbindungsschicht und Topologiedaten anfragt;
Sammeln (495) der notwendigen Verbindungsschicht und Topologiedaten aus einem Zellparameterserver;
Weiterleiten (500) der notwendigen Verbindungsschicht und Topologiedaten an die Entität;
Sammeln (265) der notwendigen Software aus einem oder mehreren Softwarebeständen in Verbindung mit dem Plug-Server;
Weiterleiten der notwendigen Software von dem Plug-Server an die Entität; und
Installieren und Konfigurieren (270) der notwendigen Software an der Entität.

2. Verfahren nach Anspruch 1, weiterhin mit den folgenden Schritten:
Sammeln (245) von Informationen über die Identifikation des Benutzers;
Durchführen (235) einer Authentifizierung der Identifikation des Benutzers vor dem Schritt des Identifizierens der Software, die notwendig ist, damit die Entität den Dienst bereitstellt.

3. Verfahren nach Anspruch 1, weiterhin mit den folgenden Schritten:
Sicherstellen (430, 435) der Kommunikationsverbindung zwischen der Entität und dem Plug-Server unter Verwendung einer Anfrage nach einem sicheren HTTP.

4. Verfahren nach Anspruch 1, weiterhin mit den folgenden Schritten:
Zuweisen (485) einer neuen IP-Adresse an die Entität unter Verwendung eines DRCP und/oder DHCP.

5. Verfahren nach Anspruch 1, wobei der Schritt des Zuweisens (215) einer zeitweiligen IP-Adresse an die Entität weiter die folgenden Schritte umfasst:
Senden (310) einer Routerabrufnachricht;
Empfangen (320) einer Routerauthentifizierungsnachricht und Erhalten eines Netzpräfixes aus derselben;
Konstruieren (330) einer zeitweiligen IP-Adresse für die Entität; und
Durchführen (340) einer Duplikatadresserfassung.

6. System zum Verbinden einer Entität (110) mit einem Netz, das einem Benutzer des Netzes einen mobilen drahtlosen Internetservice zur Verfügung stellt, mit:
einem Plug-Server (120) in Verbindung mit der zu verbindenden Entität;
einem Softwarebestand (130) in Verbindung mit dem Plug-Server zum Speichern von Software, die notwendig ist, damit die Entität dem Benutzer den Dienst zur Verfügung stellt; und
einem Zellparameterserver (140) in Verbindung mit dem Plug-Server zum Speichern einer Verbindungsschicht und Topologiedaten, die notwendig sind, damit die Entität dem Benutzer den Dienst zur Verfügung stellt;
wobei der Plug-Server (120) dazu ausgelegt ist, einen Inspektoragenten an die Entität (110) zu senden, um die Software zu identifizieren, die von der Entität benötigt wird, um dem Benutzer den Dienst zur Verfügung zu stellen, und Sammeln der identifizierten notwendigen Informationen aus dem Softwarebestand (130),
**dadurch gekennzeichnet, dass**
der Plug-Server (120) weiter dazu ausgelegt ist, die notwendige Verbindungsschicht und Topologiedaten aus dem Zellparameterserver (140) zu sammeln und die gesammelte Software und gesammelten Daten an die Entität (110) weiterzuleiten.

7. System nach Anspruch 6, weiterhin mit einer Einrichtung zum Kommunizieren zwischen dem Plug-Server und der Entität auf sichere Weise.

8. System nach Anspruch 6, wobei die Entität weiter ein Servererfassungs-Softwaremodul zum Erfassen eines Plug-Servers im Internet (150) umfasst.

9. System nach Anspruch 6, wobei die Entität weiterhin ein Auto-IP-Softwaremodul zum Zuweisen einer zeitweiligen IP-Adresse an die Entität umfasst.

10. System nach Anspruch 6, weiterhin mit einem Authentifizierungsserver (160) auf AAA-Protokoll-Basis in Verbindung mit dem Plug-Server (120) zur Authentifizierung von Informationen über die Identität des Benutzers der Entität.

11. System nach Anspruch 10, weiterhin mit einem Profilserver (180) in Verbindung mit dem Authentifizierungsserver (160) und dem Plug-Server (120) zum Speichern von Informationen bezüglich der Identität von Entitäten in dem mobilen drahtlosen Internet.

12. System nach Anspruch 6, weiterhin mit einem Kreditbüroserver (190) in Verbindung mit dem Plug-Server (120) zur Überprüfung von Informationen über die Subskription des Benutzers der Entität.

## Revendications

1. Procédé de connexion d'une entité (110) à un réseau qui fournit un service Internet mobile sans fil à un utilisateur du réseau comprenant :
l'attribution (215) d'une adresse IP temporaire à l'entité ;
la création (220) d'une liaison de communication entre l'entité et un serveur prise par l'intermédiaire d'Internet ;
l'identification (260) des logiciels nécessaires à l'entité pour fournir le service en envoyant à l'entité un agent d'inspection du serveur prise capable de découvrir les besoins logiciels de l'entité ;
l'envoi (490) d'une demande de l'agent d'inspection au serveur prise pour obtenir la couche de liaison et les informations de topologie nécessaires ;
la collecte (495) de la couche de liaison et des informations de topologie nécessaires à partir d'un serveur de paramètres de cellules ;
l'envoi (500) de la couche de liaison et des informations de topologie nécessaires à l'entité ;
la collecte (265) des logiciels nécessaires à partir d'un ou plusieurs inventaires de logiciels en communication avec le serveur prise ;
l'envoi des logiciels nécessaires par le serveur prise à l'entité ; et
l'installation et la configuration (270) des logiciels nécessaires dans l'entité.

2. Le procédé de la revendication 1 comprenant en outre les étapes suivantes :
collecte (245) des informations concernant l'identification de l'utilisateur ;
réalisation (235) de l'authentification de l'identification de l'utilisateur avant l'étape d'identification des logiciels nécessaires à l'entité pour fournir le service.

3. Le procédé de la revendication 1 comprenant en outre les étapes suivantes:
sécurisation (430, 435) de la liaison de communication entre l'entité et le serveur prise en utilisant une demande de protocole http sécurisé.

4. Le procédé de la revendication 1 comprenant en outre les étapes suivantes :
attribution (485) d'un nouvelle adresse IP à l'entité utilisant le protocole DRCP et/ou le protocole DHCP.

5. Le procédé de la revendication 1, dans lequel l'étape d'attribution (215) d'une adresse IP temporaire à l'entité comprend en outre les étapes suivantes :
envoi (310) d'un message de sollicitation de routeur ;
réception (320) d'un message d'authentification de routeur et
obtention d'un préfixe de réseau à partir de celui-ci ;
construction (330) d'une adresse IP temporaire pour l'entité ; et
réalisation (340) d'une détection d'adresse en double.

6. Système de connexion d'une entité (110) à un réseau qui fournit un service Internet mobile sans fil à un utilisateur du réseau comprenant :
un serveur prise (120) en communication avec l'entité devant être connectée ;
un inventaire de logiciels (130) en communication avec le serveur prise permettant de stocker les logiciels nécessaires à l'entité pour fournir le service à l'utilisateur ; et
un serveur de paramètres de cellules (140) en communication avec le serveur prise permettant de stocker la couche de liaison et les informations de topologie nécessaires à l'entité pour fournir le service à l'utilisateur ;
dans lequel le serveur prise (120) est prévu pour envoyer un agent d'inspection à l'entité (110) pour identifier les logiciels dont a besoin l'entité pour fournir le service à l'utilisateur et est adapté pour collecter les informations nécessaires identifiées à partir de l'inventaire de logiciels (130),
**caractérisé en ce que**
ledit serveur prise (120) est également adapté pour collecter la couche de liaison et les informations de topologie nécessaires à partir du serveur de paramètres de cellules (140) et pour envoyer les logiciels et les données collectés à l'entité (110).

7. Le système de la revendication 6 comprenant en outre un moyen permettant d'établir une communication sécurisée entre le serveur prise et l'entité.

8. Le système de la revendication 6, dans lequel l'entité comprend en outre un module de logiciel de découverte de serveur permettant de découvrir un serveur prise sur Internet (150).

9. Le système de la revendication 6, dans lequel l'entité comprend en outre un module de logiciel Auto-IP permettant d'attribuer une adresse IP temporaire à l'entité.

10. Le système de la revendication 6 comprenant en outre un serveur d'authentification basé sur un protocole AAA (160) en communication avec le serveur prise (120) afin d'authentifier les informations concernant l'identité de l'utilisateur de l'entité.

11. Le système de la revendication 10 comprenant en outre un serveur de profils (180) en communication avec le serveur d'authentification (160) et le serveur prise (120) permettant de stocker les informations concernant l'identité des entités sur le réseau Internet mobile sans fil.

12. Le système de la revendication 6 comprenant en outre un serveur de bureau de crédit (190) en communication avec le serveur prise (120) afin de valider les informations concernant l'abonnement de l'utilisateur de l'entité.
